# EUROPEAN PATENT APPLICATION

(11) **EP 0 589 106 A1**
(43) Date of publication of application: **30.03.1994**
(21) Application number: 92308645.8
(22) Date of filing: 23.09.1992
(51) Int. Cl.: H04L 12/28, H04L 29/06

(54) **Network and method for communicating data**

(71) Applicant: Hewlett-Packard Company, Palo Alto, California 94304 (US)
(72) Inventor: Spratt, Michael Peter, Henleaze, Bristol BS9 4NY (GB)
(74) Representative: Coker, David Graeme

(57) **Abstract**

In a network for communicating data over a wireless channel (e.g. using infra-red radiation), a transmitting station is arranged to pause regularly during data transmission and monitor the communications channel for a confirmation signal from the receiving station that no interference has occurred. If no confirmation is received the transmitting station discontinues that transmission. The network uses a data code having a respective code symbol for each data value to be communicated, and in which superpositions of any two or more data symbols (e.g. because of interference between two transmitting stations) form symbols which are different from any valid data symbol. Thus interference generates invalid symbols which are directly detectable as such. Any other station which has received any data symbol or confirmation signal waits thereafter for a period at least equal to the interval between confirmation signals before attempting transmission itself.

The network effectively regulates access to a shared communication channel, and in particular resolves the problem of 'hidden' stations which cannot directly receive signals from some other stations in the network but which can transmit to stations which do receive those signals, and can thus interfere with their reception of those signals. In this way the network can reduce waste of power and effective decrease in channel bandwidth which would otherwise occur.

## Description

### Technical Field

This invention relates to networks and methods for communicating data amongst a multiplicity of stations over a shared communications medium, for example between different computers or computer users, and particularly, though not exclusively, to wireless networks such as infra-red networks.

### Background Art

Networks for communicating data are already known. These include wired networks using a communications medium such as coaxial or twisted pair cable, and wireless networks using a communications medium such as electromagnetic radiation at radio or infra-red frequencies. Wireless networks are assuming increasing importance as a means for communicating with mobile stations, e.g. small portable computers.

In such networks it is generally necessary to provide some method for regulating access to the communications medium by the stations which wish to communicate over it. In the case of wired networks, this is typically accomplished either by detecting and resolving conflicting transmissions (collisions) by different stations, as in Ethernet networks, or by enabling stations to reserve particular transmission opportunities, as in token ring networks. Either approach is relatively straightforward to implement, since communication is inherently possible with all active stations in the network, enabling either collision detection or distribution of a common reference time frame.

In the case of wireless networks, both these approaches encounter problems, especially in view of the possibility of 'hidden' stations. Because stations may be mobile, or may be added to the network without any physical connection, there is a possibility that two different stations wishing to transmit to a third may each be able to communicate with that third station but not with each other. In these circumstances, a collision detection method which relies on a transmitting station monitoring for simultaneous transmissions from other stations will fail. This problem is particularly severe in the case of infra-red wireless networks, since infra-red radiation is essentially line-of-sight and non-penetrating in nature, so virtually any opaque obstruction will block it. Furthermore, infra-red sources suitable for use in such networks are typically not omnidirectional, and a transmission path between two stations may not be reciprocal in its propagation characteristics, thereby exacerbating the problem.

It is an object of this invention to provide a network which can communicate over a wireless medium and which at least alleviates this problem.

### Disclosure of Invention

According to one aspect of this invention there is provided a network for communicating data amongst a multiplicity of stations over a shared communications medium, comprising:
a multiplicity of stations arranged to encode data for transmission over said medium using a code which comprises a predetermined set of valid symbols, including data symbols and a confirmation symbol;
said stations being arranged to transmit data as successive groups of said symbols;
each said station being arranged, when receiving data over said medium, to check that each data symbol received is valid, and, after a group of data symbols has been received, to transmit a confirmation symbol over said medium upon condition that all of said group of received symbols were valid;
each said station being arranged, when it has data to transmit over said medium, to refrain from transmitting until a predetermined period has elapsed without reception by that station of any data symbol or any confirmation symbol from any other station; and
each said station which has transmitted a group of data symbols being arranged to continue transmission only if it receives a valid confirmation symbol within a predetermined time interval after that group of data symbols has been transmitted.

Preferably all possible symbols outside said set are invalid and all superpositions of different data symbols form symbols which are not valid data symbols.

The set of symbols may include a message start symbol and each station may be arranged, when it has data to transmit over said medium, to transmit a message start symbol and to transmit further symbols only if it receives a confirmation symbol in response to said message start symbol. Alternatively each station may be arranged, when it has data to transmit, to transmit a plurality of symbols identifying a station intended to receive said data, and to transmit further symbols only if it receives a confirmation symbol in response to said plurality of symbols. Preferably in either case a station receiving symbols identifying a station intended to receive data transmits a confirmation symbol in response thereto only if said symbols as received are valid and if that receiving station is the station identified by the symbols as intended to receive said data.

Each station may be arranged, when it has data to transmit over said medium, to refrain from transmitting until a predetermined period has elapsed without reception by that station of any signal above a predetermined threshold signal strength. However, a station having data to transmit over said medium may commence transmission within said predetermined period if it receives an indication that transmission by another station has terminated. Preferably a station receiving one or more symbols indicating the start of a transmission may refrain from transmitting a confirmation symbol in response thereto unless said predetermined period without reception has elapsed.

According to another aspect of this invention there is provided a method for communicating data amongst a multiplicity of stations over a shared communications medium, wherein:
data is encoded for transmission over said medium using a code which comprises a predetermined set of valid symbols, including data symbols and a confirmation symbol;
data is transmitted as successive groups of said symbols;
a station receiving data over said medium checks that each data symbol received is valid, and, after a group of data symbols has been received, transmits a confirmation symbol over said medium upon condition that all of said group of received symbols were valid;
a station having data to transmit over said medium refrains from transmitting until a predetermined period has elapsed without reception by that station of any data symbol or any confirmation symbol from any other station; and
a station which has transmitted a group of data symbols continues transmission only if it receives a valid confirmation symbol within a predetermined time interval after that group of data symbols has been transmitted.

According to a third aspect of this invention there is provided a station for communicating data with other stations over a shared communications medium, comprising:
transmitter means and receiver means;
means for encoding data for transmission over said medium using a code which comprises a predetermined set of valid symbols, including data symbols and a confirmation symbol;
means coupled to said transmitter means for transmitting data as successive groups of said symbols;
means coupled to said transmitter means and said receiver means for checking, when data is being received over said medium, that each data symbol received is valid, and, after a group of data symbols has been received, for transmitting a confirmation symbol over said medium upon condition that all of said group of received symbols were valid;
means coupled to said transmitter means and said receiver means for inhibiting transmission of data over said medium until a predetermined period has elapsed without reception by that station of any data symbol or any confirmation symbol from any other station; and
means coupled to said transmitter means and said receiver means and operative when the station has transmitted a group of data symbols to inhibit continued transmission unless a valid confirmation symbol is received within a predetermined time interval after that group of data symbols has been transmitted.

A group of data symbols may comprise a predetermined maximum number of data symbols, although a group terminating a message can contain fewer than said maximum number of symbols. The set of symbols may include a message end symbol and/or a confirmation symbol to follow the end of a message.

### Brief Description of Drawings

A network and method in accordance with this invention will now be described, by way of example, with reference to the accompanying drawings, in which:
- Figure 1: shows a network including three stations A, B and C communicating via an infra-red wireless channel;
- Figure 2: summarizes a coding scheme used for encoding data communicated over the network shown in Figure 1;
- Figure 3: shows the frame structure in a protocol used for communicating data over the network shown in Figure 1;
- Figures 4*a* and 4*b*: illustrate the transmissions made by each station in the network during communication of a frame of data between two of the stations;
- Figure 5: is a block schematic diagram of a transmitter forming part of each station;
- Figure 6: is a block schematic diagram of a receiver forming part of each station; and
- Figures 7, 8 and 9: are state diagrams illustrating the operation of the transmitter shown in Figure 5 and the receiver shown in Figure 6.

### Best Mode for Carrying Out the Invention, & Industrial Applicability

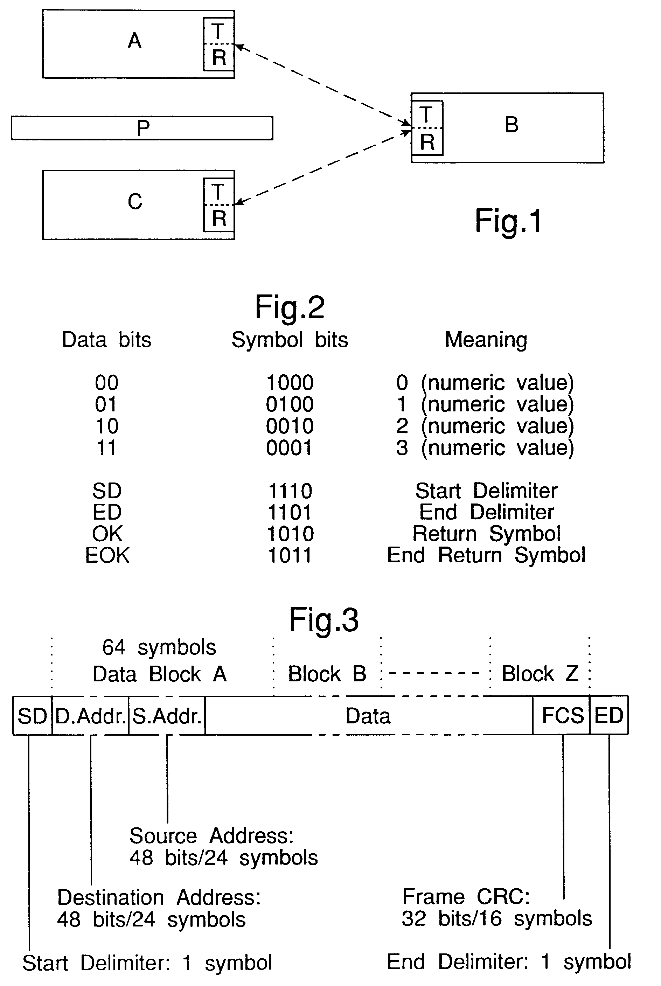

An example of a network to which the present invention is applicable is shown in Figure 1. Two stations A and C (which may be, for example, personal computers, computer peripheral devices such as printers, or miniature hand-held computing appliances) are located on either side of a partition P, and spaced from a third station B. Each station A, B and C includes an infra-red transmitter T and receiver R for communicating information between the stations by means of modulated infra-red radiation. As shown by the dashed arrows in Figure 1, stations A and C can each communicate directly with station B; however, these two stations cannot communicate with each other, since the line-of-sight path between them is blocked by the opaque partition P. Furthermore, the station A cannot even directly sense whether the station C is transmitting, and vice-versa. Thus if both the stations A and C attempt to transmit to the station B simultaneously, this latter station will sense interfering signals which it will be unable to receive correctly. Retransmission of the communications from both stations A and C will be necessary, wasting time and electric power; in the case of small, personal, battery-powered devices any waste of electric power is especially undesirable.

In order to avoid such waste, the present invention provides a mechanism for periodic confirmation by a receiving station that the communication in progress has not been perturbed, together with a signal coding arrangement which makes interference immediately evident.

The system to be described implements the physical layer and the Media Access Control (MAC) portion of the data link layer, of the seven-layer OSI model for network services as modified to describe local area networks. Functions such as confirming receipt of complete packets, requesting retransmission of corrupt or missing packets and assembly of received packets into the correct sequence are considered to be performed by services provided in higher layers of that network model, as known to those skilled in this art. These services form no part of the operation of the present invention and therefore will not be described in detail.

One possible signal coding arrangement for use in the physical layer in this invention is illustrated in Figure 2. Data bits to be communicated are grouped into pairs, and each pair of data bits is communicated over the infra-red channel using a code symbol comprising four code bits (a so-called 2B/4B coding). The particular symbols used are chosen so that, for each possible data bit pair, only one of the four code bits has a 1 value, the remaining three bits having a 0 value; the position of the 1-value bit in each respective symbol is different for each data bit pair.

Data to be communicated between stations is divided into packets, in a manner analogous to that used, for example, in Ethernet networks, and packets are combined with addressing and control information to produce frames for actual transmission between stations. Special code symbols are defined to indicate the start (SD) and end (ED) of a frame; a third special symbol (OK) is provided for use by a receiving station as a confirmation symbol, confirming that code symbols it has received are valid, and a fourth special symbol (EOK) is used for the same purpose at the end of a frame. The SD, ED, OK and EOK symbols differ from the data code symbols in having two or more bits with a 1 value.

The code symbols shown in Figure 2 are the only valid symbols which may be transmitted. Any other set of four code bits is deemed to be invalid. It can be seen that superposition of any two or more data code symbols will produce a composite 'symbol' which is invalid as a data code symbol. For example if the code symbols representing the data bit pairs '00' and '01' are superposed, the resulting code symbol is 1100; this has two bits with a 1 value, and is therefore immediately recognizable as being invalid.

Figure 3 shows the structure of a frame of data for transmission between stations. The frame commences with an SD code symbol, followed by 24 data symbols (48 data bits) identifying the address of the station intended to receive the data and by another 24 data symbols identifying the address of the station sending it. The addresses are followed by a series of data code symbols encoding the packet of information to be communicated to the receiving station. There is then a 16-symbol (32-bit) frame check sequence, containing a cyclic-redundancy check code derived from the preceding code symbols, to permit error checking and detection at the receiving station. The frame is terminated by an ED code symbol.

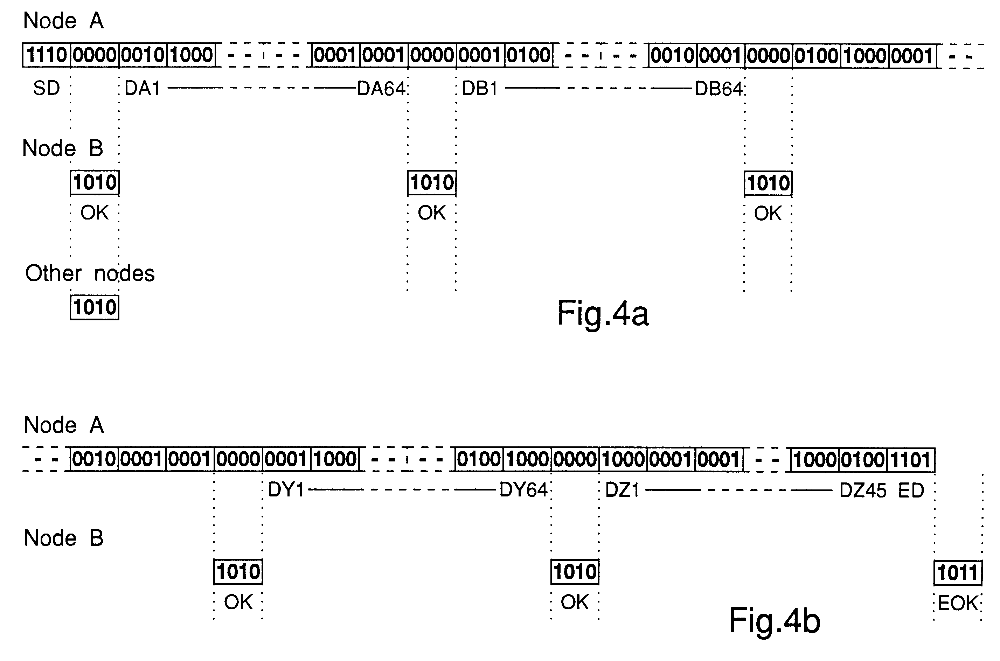

After the SD symbol a frame is transmitted as successive blocks of symbols; with the exception of the block containing the ED symbol, each block contains sixty-four symbols, as shown in Figures 4*a* and 4*b*. Referring to Figure 4*a*, and assuming that the communication channel is idle, station A commences transmission of a frame by sending the SD symbol, immediately followed by a 'blank' symbol, that is a period of four code bits in duration during which station A does not transmit. Any station which correctly receives this SD symbol responds during the blank symbol period by transmitting an OK symbol. In this embodiment station A does not alter its operation in accordance with whether or not it receives this OK symbol; nonetheless, the transmission of an OK symbol at this point immediately alerts any other station which receives it, but which cannot receive signals directly from station A, that a data transmission is commencing and that it should therefore refrain from transmitting to avoid interference.

Station A then transmits the first block of sixty-four symbols (data block A) of the frame; the initial twenty-four symbols DA1 to DA24 comprise the destination address, the next twenty-four symbols DA25 to DA48 comprise station A's address, and the final sixteen symbols DA49 to DA64 of this first block comprise the initial thirty-two bits of the actual information to be communicated. This data block is followed by a blank symbol period.

Each station which receives this data block A carries out two tasks: it checks that each of the sixty-four symbols is a valid data code symbol (i.e. containing only a single 1-value bit); and it extracts the destination address, contained in symbols DA1 to DA24, and compares it with its own station address. Provided all the symbols are valid, the station (if any) whose address matches that in data block A transmits an OK symbol in the blank symbol period following data block A.

If the intended destination station does not receive data block A (in which case no station will find a match with its station address), or if any of the sixty-four symbols is invalid (indicating for example that a collision with another transmission has occurred), then no OK symbol will follow. In this case the transmitting station A ceases transmission of data and waits for a random 'back-off' interval before attempting to transmit another frame. As noted above, the tasks of recognizing that the packet of information contained in the interrupted frame has not been properly sent, and of arranging retransmission, are performed in known manner by services in layers of the network model above those described here.

Provided station A does receive an OK symbol, indicating that the intended recipient (station B in Figure 4*a*) has correctly received data block A, it then transmits another block (B) of sixty-four symbols, followed by a blank symbol period. If station B receives sixty-four valid symbols it responds during this period with another OK symbol. This cycle of transmission of data blocks followed by confirmation of symbol validity continues as long as station A has data to transmit and there is no corruption of station A's transmissions as received by station B. When station A reaches the end of the data to be sent, it transmits a final block (data block Z in Figure 4*b*; the last seventeen symbols of the transmission comprise the frame CRC followed by the ED symbol. Assuming all symbols in data block Z are validly received, the receiving station B responds with an EOK symbol.

The total number of data blocks in a frame, and the number of symbols in the final data block, may of course vary from frame to frame.

If any symbol in any data block is not valid when received by the station B, then station B refrains from sending an OK (or EOK) symbol during the blank symbol period after that block. If the transmitting station A fails to receive such an OK symbol, either because station B has not sent it or because of some kind of interference (e.g. an object moved to a position where it blocks the line-of-sight path between the stations A and B), then station A abandons transmission of the frame containing that block. It subsequently waits for a back-off period of random duration before attempting transmission of another frame. The range of duration of potential back-off periods is doubled if an expected OK symbol, or EOK symbol, is not received.

When a station is not transmitting data itself, it monitors the communication channel for data symbols received from other stations. If symbols received by a station indicate that a frame of data is intended for that station, it responds as indicated above. Otherwise the receipt of any signal above a predetermined threshold signal strength causes the station to reset a timer; such signal may be a data symbol from a transmitting station, an OK/EOK symbol from another receiving station, a transmission from a station too distant to allow symbol decoding, or a transmission by equipment not in the network. This timer provides a predetermined waiting interval whose duration is equal to the duration of one data block of sixty-four symbols. When the station itself has data to transmit, it will refrain from attempting to do so until the waiting interval defined by the timer has expired. Since the waiting interval is as long as a data block, receipt of a further OK symbol from another station which is continuing a prior transmission will reset the timer and start another waiting interval before the waiting station can attempt transmission itself. After a waiting interval has expired without the timer being reset, the station will wait a short interval (equivalent to the back-off period described above) before beginning to transmit, in order to minimize the possibility of coincident transmissions from two or more stations which have been waiting to transmit.

This timer also controls the transmission of the first OK symbol by a station receiving a frame. If an SD symbol is received, and the waiting interval has not expired as the SD symbol arrives, the station does not send any OK symbol in response, in order to avoid possible interference with another transmission already in progress.

However, the receipt of an EOK symbol preceded by two OK symbols separated by the duration of a data block and with no interfering transmissions between these three symbols, or the receipt of an ED symbol preceded by two blocks of valid data symbols, allow the waiting interval to be terminated prematurely. These combinations of events indicate that a complete frame transfer has just ended, so a station detecting them can proceed to transmit, after the random-duration back-off period. Likewise, in these circumstances a station can ignore an unexpired waiting interval and respond with an OK symbol to an SD symbol.

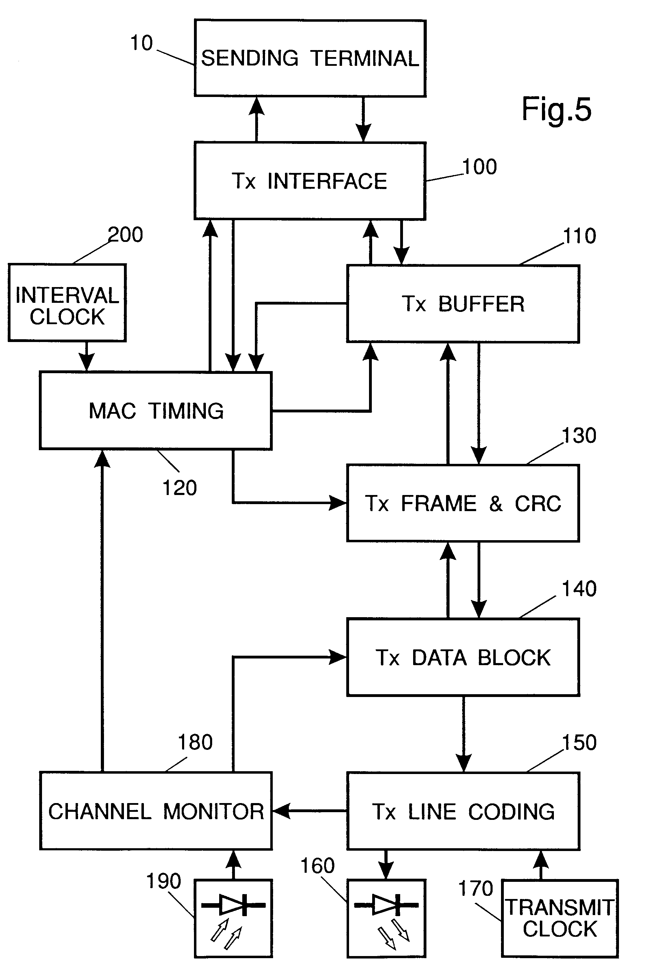

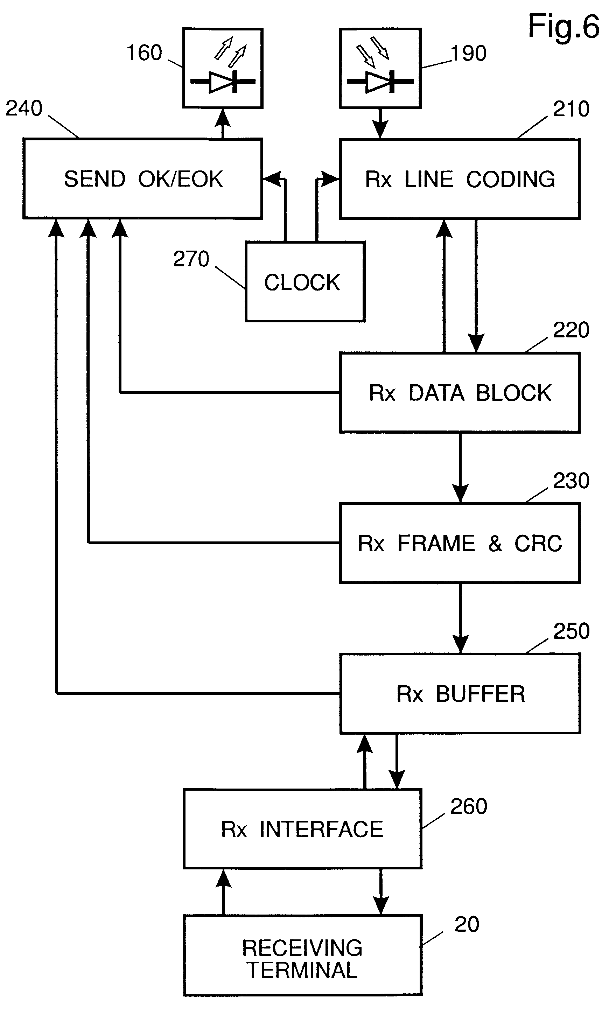

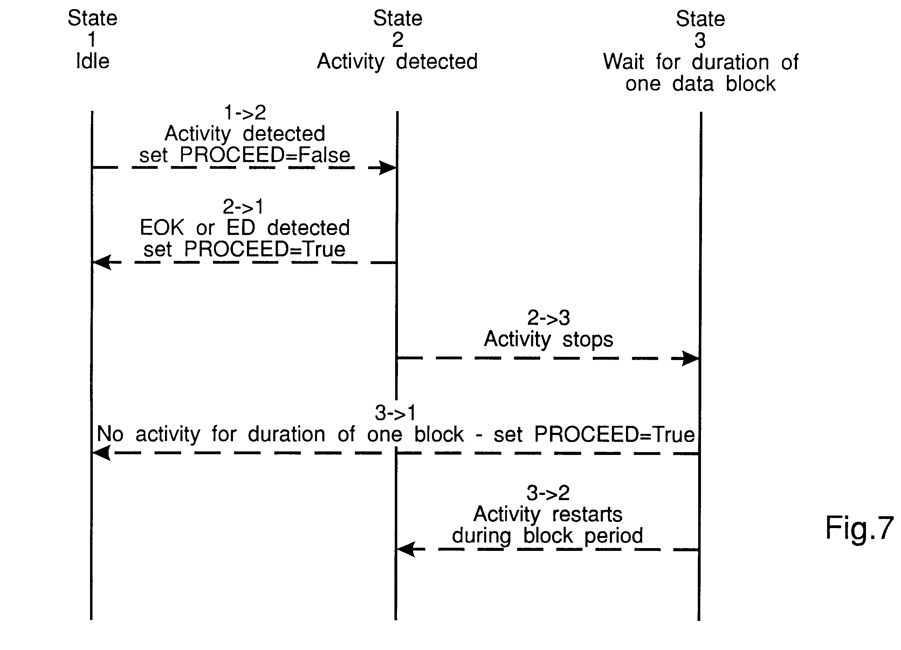

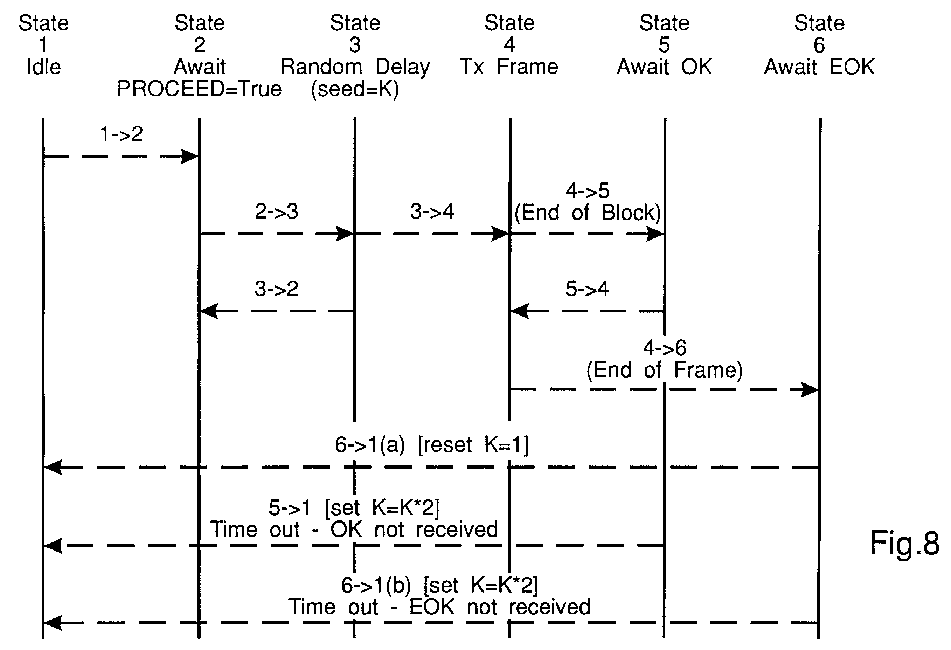

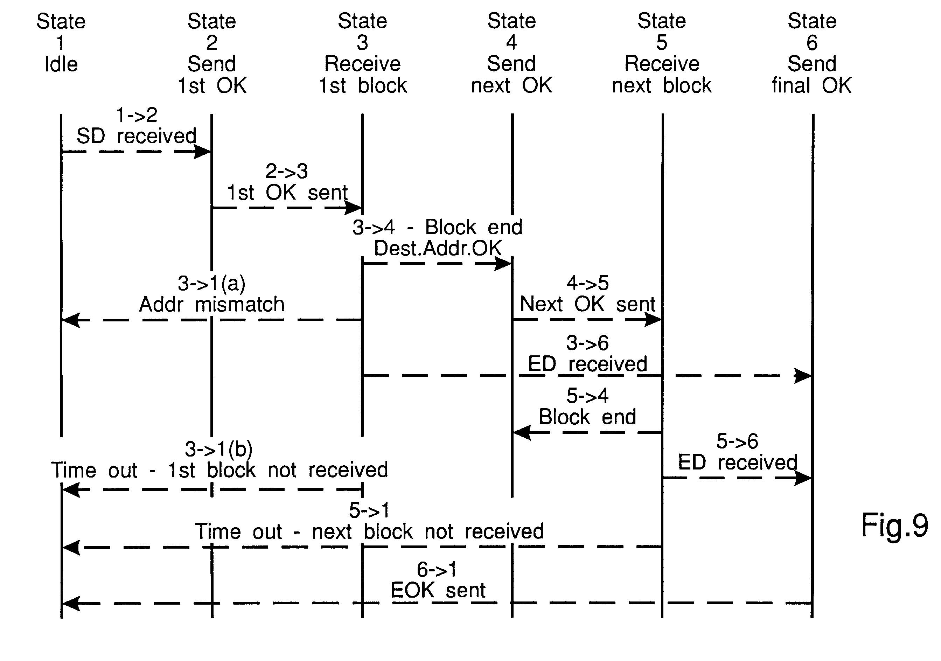

Circuitry for implementing the functions just described is shown in Figure 5 (transmitter T) and Figure 6 (receiver R). The operation of the transmitter T of Figure 5 is illustrated by the state machine diagrams in Figures 7 and 8, and that of the receiver R of Figure 6 by the state machine diagram of Figure 9. The arrows interconnecting blocks in Figures 5 and 6 indicate in general terms the flow of data and control signals, as described below.

Referring to Figure 5, the transmitter T has a transmit interface 100 connected to circuitry, represented as sending terminal 10, which is located in the station containing the transmitter and which generates data to be transmitted. The sending terminal 10 provides the transmit interface 100 with data to be transmitted and the network address of the destination station to which the data is to be communicated. The transmit interface 100 divides the data to be transmitted into packets of appropriate size.

The transmit interface 100 is in turn connected to a transmit buffer 110 and a MAC timing circuit 120, which are themselves interconnected. If the interface 100 has packets of data for transmission, it signals the transmit buffer 110 to accept a packet, transfers the packet data and the destination address to the buffer 110, and then signals the buffer to send the packet.

While the buffer 110 has a packet to send, it signals this to the MAC timing circuit 120, and, unless it receives a signal from that circuit indicating that the transmission is abandoned (for example because the range of potential back-off periods has been extended excessively by repeated interference), transfers the destination address and the data to a transmitter frame and CRC circuit 130. This circuit 130 assembles the destination address and the data, together with the address of its own station (source address), into a frame, and calculates the CRC for the frame and appends it to the frame. Provided the circuit 130 receives an enabling signal from the MAC timing circuit 120, indicating that the waiting interval described above is not in progress, the circuit 130 transfers data symbols encoding the contents of the frame to a transmit data block circuit 140.

The transmit data block circuit 140 in turn transfers blocks of data symbols, and when appropriate the SD and ED symbols, to a transmit line coding circuit 150 which encodes each symbol into the corresponding set of four data bits (as defined in Figure 2), and energizes an infra-red emitter 160 (such as an infrared emitting diode) to transmit those bits in synchronism with clock pulses from a transmit clock 170.

When a complete data block has been transmitted, the transmit line coding circuit 150 signals this to a channel monitor 180 to define the blank symbol period within which the channel monitor 180 waits for an OK (or EOK) symbol to be received via an infra-red sensor 190. Provided this symbol is received during the blank symbol period, indicating correct reception of all symbols in the data block, the channel monitor 180 signals the transmit data block circuit 140 to continue with transmission of the next data block (if any). If necessary the transmit line coding circuit 150 can insert a reference pulse at the beginning of each data block, to assist with receiver synchronization to the transmitted pulse sequence.

If no OK or EOK symbol is received within the blank symbol period, the channel monitor 180 signals this as an error to the transmit data block circuit 140, causing it to cease transferring data symbols to the transmit line coding circuit 150. The error signal is also passed back to the transmit buffer 110 via the transmit frame and CRC circuit 130, to inhibit these circuits from continuing to process the current frame.

The channel monitor 180 also provides a channel busy signal to the MAC timing circuit 120 whenever signals are detected on the communication channel by the infra-red sensor 190, indicating communication activity between other stations in the network. This channel busy signal is used by the MAC timing circuit 120, with signals from an interval clock 200, to define the waiting interval before the transmitter attempts a new transmission. To save power, the MAC timing circuit 120 and the clock 200 can be arranged to operate only if the transmit buffer 110 indicates that it has a packet awaiting transmission, as described above.

The status of transmission of a frame (in particular any interruption caused by absence of an expected OK symbol) is signalled by the transmit buffer 110 back to the transmit interface 100, and the general transmitter status (e.g. transmitting or backing-off) is likewise signalled to the transmit interface 100 by the MAC timing circuit 120.

Referring to Figure 6, the receiver R includes a receive line coding circuit 210 which decodes infra-red signals detected by the infra-red sensor 190 into corresponding symbols and passes them to a receive data block circuit 220. The circuit 210 also signals if any invalid data symbol is received during a data block, and when the SD and ED symbols are detected.

The receive data block circuit 220 assembles data symbols into blocks which it transfers to a receive frame and CRC circuit 230. The circuit 220 also recognizes the end of each data block and signals this to the line coding circuit 210 so that it can recognize any synchronization pulse at the start of the next block; provided no invalid symbols have been indicated by the line coding circuit 210, the end-of-block signal is also supplied to a send OK/EOK circuit 240.

The receive frame and CRC circuit 230 assembles data blocks into frames, and checks that the CRC value is correct. Upon receipt of the first data block in a frame, it also compares the destination address contained in that block with its own station address and verifies that the addresses match (i.e. the frame is intended for its station). The results of these tests are signalled to the send OK/EOK circuit 240. If the received CRC value is incorrect, or there is any other error in the frame structure, or an invalid data symbol is received, this is signalled to a receive buffer 250, which then clears any data already received for that frame from its memory; otherwise the packet of data contained in the frame and the address of the station which transmitted the data (the source address) are passed by the circuit 240 to the receive buffer 250.

The receive buffer 250 in turn transfers the received data and source address to circuitry in the receiving station (depicted in Figure 6 as receiving terminal 20), via a receive interface 260. To this end the receive buffer 250 indicates to the receive interface 260 when it has a complete packet of data to transfer, and proceeds with the transfer in response to a signal to do so from the interface 260. When the transfer has been completed the interface 260 signals the receive buffer 250 to clear its memory in readiness for another frame. The receive buffer 250 signals to the send OK/EOK circuit 240 whether it is full or can receive further data.

At the end of each completely valid data block, as indicated by the receive data block circuit 220, and provided there has been no frame error, address mismatch or overflow of the receive buffer 250, the send OK/EOK circuit 240 transmits an OK or EOK symbol as appropriate, via the infra-red emitter 160. The operation of the receive line coding circuit 210 and the send OK/EOK circuit 240 are coordinated by a clock circuit 270.

The operation of the transmitter T and the receiver R is summarized by the state machine diagrams in Figures 7 (monitor), 8 (transmitter) and 9 (receiver). In these diagrams each separate state is indicated by a vertical, numbered solid line. Transitions between states are indicated by horizontal dashed arrows depicting the direction, start and finish of the transition; the arrows are additionally labelled with the numbers of the start and finish states.

In order to react to activity on the communication channel (e.g. transmissions from another station or OK/EOK symbols from a station receiving such transmissions) by providing a waiting interval following such activity as described above, the station implements a monitor state machine to control a boolean flag PROCEED indicating whether or not transmission may proceed. This state machine is shown in Figure 7 and has three states, as follows:
- State 1:: Idle - No activity is currently being detected. The flag PROCEED is True.
- State 2:: Activity detected - transmissions by other nodes are currently being detected.
- State 3:: Timer - transmissions by other nodes have stopped; wait in the Timer state for a waiting interval (duration of a sixty-four symbol data block).

The transitions between these states, and associated stimuli and actions, are as follows:
- 1-> 2: Activity is detected. The flag PROCEED is set to False.
- 2-> 1: An ED symbol preceded by two valid data blocks, or an EOK symbol preceded by two correctly-spaced OK symbols with no interference between these three symbols, is detected. (This means the detected transmission is concluded, so the communication channel is becoming available for immediate use.) The flag PROCEED is set to True.
- 2-> 3: Activity ceases to be detected. (A waiting interval must now commence.)
- 3-> 1: The state 'Timer' (state 3) has existed for a period of time equal to the duration of a data block, and no activity has been detected during this period. The flag PROCEED is set to True.
- 3-> 2: While in the state 'Timer' (state 3), activity is detected. The waiting interval must be restarted.

Referring to Figure 8, the transmitter state machine has six states, as follows:
- State 1:: Idle - in this state the machine is waiting for a frame to become available for transmission; this state is transient if transmission of a frame has just been completed and the next frame is already available;
- State 2:: Await PROCEED=True - if PROCEED is False, there is activity on the communication channel, so the station should not transmit, in order to avoid interfering with existing transmissions.
- State 3:: Random delay - a 'back-off' delay is generated with a random duration, in the range zero to K; thus if two stations in close proximity are attempting to transmit, their transmissions should not repeatedly conflict.
- State 4:: Transmitting frame - the station is in the process of sending a block of data. The transmitting station sends the SD symbol, and pauses to allow the first OK symbol to be sent back. The transmitter then sends the first block (including the destination address), and waits (in State 5) for the second OK Symbol, which will be sent if and only if a receiving node recognises its own address as the destination address. At the end of each subsequent block, the transmitter again goes into State 5 to await an OK Symbol.
- State 5:: Await OK symbol - After sending a data block the transmitter waits for an OK Symbol to come back from the receiver.
- State 6:: Await EOK symbol - At the end of the frame, the station sends the ED symbol, and waits for the EOK symbol.

The transitions between these states, and associated stimuli and actions, are as follows:
- 1-> 2: A frame has become available for transmission, or is already waiting for transmission when the transmitter returns to state 1.
- 2-> 3: The flag PROCEED becomes (or is) True.
- 3-> 2: The flag PROCEED has become False during the random delay in State 3.
- 3-> 4: The random delay has ended, and the station starts transmitting a frame.
- 4-> 5: A complete block of data has been transmitted. The station then waits for an OK symbol to arrive.
- 4-> 6: The complete frame, including the ED symbol, has been transmitted. The station then waits for an EOK symbol to arrive.
- 5-> 1: No OK symbol arrives within the blank symbol period following a data block. The range of duration of subsequent potential random-length delays is doubled, and transmission of the current frame is abandoned.
- 5-> 4: An OK symbol is detected. The next data block can be transmitted.
- 6-> 1(a): An EOK symbol is detected. The frame has been successfully received, and the range of duration of subsequent potential random-length delays is reset to its initial value.
- 6-> 1(b): No EOK symbol arrives within the blank symbol period following the final data block. The range of duration of subsequent potential random-length delays is doubled, as a precaution.

The operation of the receiver R is summarized by the state machine diagram which is shown in Figure 9 and which has six states, as follows:
- State 1:: Idle - no SD symbol has been received since the last frame finished.
- State 2:: Send first OK - upon receiving an SD symbol, and if PROCEED is True, the station sends an OK symbol.
- State 3:: Receive first block - the first data block of a frame (including the destination address) is being received.
- State 4:: Send next OK - the OK symbol is sent in response to a data block (rather than in response to the SD symbol), and only a station with an address matching the destination address in the frame transmits the OK symbol.
- State 5:: Receive next block - the second or subsequent block of the frame is being received.
- State 6:: Send EOK symbol - the EOK symbol is sent in response to reception of an ED symbol, at the end of the final data block.

The transitions between these states, and associated stimuli and actions, are as follows:
- 1-> 2: An SD symbol is received and PROCEED is True.
- 2-> 3: The first OK symbol has been sent by the station.
- 3-> 1(a): The first data block has arrived, but the destination address contained in the block does not match the address of this station. The data received so far are discarded.
- 3-> 1(b): The first data block has not arrived as expected, i.e. with the correct number (sixty-four) of consecutive valid data symbols. No data transferred.
- 3-> 4: The first data block has arrived correctly, and the destination address contained in the block matches the address of this station.
- 3-> 6: ED symbol received during the first data block.
- 4-> 5: A subsequent (not the first) OK symbol has been sent by the station.
- 5-> 1: A data block has not arrived as expected, i.e. with the correct number (sixty-four) of consecutive valid data symbols, or with fewer consecutive valid data symbols followed by an ED symbol. The data received so far are discarded.
- 5-> 4: The next data block has arrived correctly.
- 5-> 6: The ED symbol has been received.
- 6-> 1: The ED symbol has been received and the EOK symbol has been sent, so the reception of the frame is complete.

The infra-red sensor 190 and the receive line coding circuit 210 in the receiver R (Figure 6) can employ any suitable technique for detecting and synchronizing with infra-red signals transmitted by other stations. One possible technique is based upon the use of a phase-locked loop, and requires the inclusion of a 'preamble' of additional pulses at the beginning of each data block, to enable the receiver circuitry to establish phase lock with the incoming signal. Another known technique which can be used, called 'over-sampling', involves sampling the detected infra-red signal at a higher rate than the transmitted pulse rate in order to ensure that each pulse of the received signal is properly detected despite differences and drifts of clock frequencies in the transmitter and receiver.

Although the above description has related to the example of a network using infra-red communication, it should be noted that the invention can also be used with other wireless communication techniques, such as radio, or with wired systems such as short, shared bus networks.

Various modifications can be made to the system described above. Thus, for example, the transmitter T can be arranged to check that an OK symbol is actually returned after it sends an SD symbol, instead of deferring checking for an OK symbol until after the destination address has been sent as described above. Alternatively, the receiver R can be arranged not to respond directly to an SD symbol, in which case the transmitter T need not allow any blank symbol period immediately after an SD symbol. Another possibility is for the receiver R to check symbol validity and destination address, and return a confirmation symbol if appropriate, immediately after the destination address portion of the first data block has been transmitted.

In another modification, no special EOK symbol is defined, but an OK symbol is used instead, and a station wishing to transmit relies solely on waiting before transmitting for the duration of one data block after receiving any OK symbol, in order to avoid interfering with other transmissions. The same unqualified waiting interval may be applied in place of monitoring (as described above for transition 2-> 1 of the monitor state machine) for specific combinations of EOK and OK signals or data blocks terminating in an ED symbol. Furthermore a receiver may be arranged not to send any response to an ED symbol at all. Each of these approaches simplifies the design of the stations in the network, at the expense of less efficient utilization of the shared communications medium.

The monitor state machine (Figure 7) may be simplified by omitting the transition 2-> 1, and relying instead solely on expiration of the waiting interval before the flag PROCEED is set to True (transition 3-> 1).

## Claims

1. A network for communicating data amongst a multiplicity of stations over a shared communications medium, comprising:
a multiplicity of stations arranged to encode data for transmission over said medium using a code which comprises a predetermined set of valid symbols, including data symbols and a confirmation symbol;
said stations being arranged to transmit data as successive groups of said symbols;
each said station being arranged, when receiving data over said medium, to check that each data symbol received is valid, and, after a group of data symbols has been received, to transmit a confirmation symbol over said medium upon condition that all of said group of received symbols were valid;
each said station being arranged, when it has data to transmit over said medium, to refrain from transmitting until a predetermined period has elapsed without reception by that station of any data symbol or any confirmation symbol from any other station; and
each said station which has transmitted a group of data symbols being arranged to continue transmission only if it receives a valid confirmation symbol within a predetermined time interval after that group of data symbols has been transmitted.

2. A network according to claim 1, wherein all possible symbols outside said set are invalid and all superpositions of different data symbols form symbols which are not valid data symbols.

3. A network according to claim 1 or claim 2, wherein said set of symbols includes a message start symbol and wherein each said station is arranged, when it has data to transmit over said medium, to transmit a message start symbol and to transmit further symbols only if it receives a confirmation symbol in response to said message start symbol.

4. A network according to claim 1 or claim 2, wherein each said station is arranged, when it has data to transmit over said medium, to transmit a plurality of symbols identifying a station intended to receive said data, and to transmit further symbols only if it receives a confirmation symbol in response to said plurality of symbols.

5. A network according to claim 3 or claim 4, wherein a station receiving symbols identifying a station intended to receive data transmits a confirmation symbol in response thereto only if said symbols as received are valid and if that receiving station is the station identified by the symbols as intended to receive said data.

6. A network according to any one of the preceding claims, wherein each station is arranged, when it has data to transmit over said medium, to refrain from transmitting until a predetermined period has elapsed without reception by that station of any signal above a predetermined threshold signal strength.

7. A network according to any one of the preceding claims, wherein a station having data to transmit over said medium commences transmission within said predetermined period if it receives an indication that transmission by another station has terminated.

8. A network according to any one of the preceding claims, wherein a station receiving one or more symbols indicating the start of a transmission refrains from transmitting a confirmation symbol in response thereto unless said predetermined period without reception has elapsed.

9. A network according to any one of the preceding claims, wherein a group of data symbols comprises a predetermined maximum number of data symbols.

10. A network according to claim 9, wherein a group of data symbols terminating a message can contain fewer than said maximum number of symbols.

11. A network according to any one of the preceding claims, wherein said set of symbols includes a message end symbol and/or a confirmation symbol to follow the end of a message.

12. A method for communicating data amongst a multiplicity of stations over a shared communications medium, wherein:
data is encoded for transmission over said medium using a code which comprises a predetermined set of valid symbols, including data symbols and a confirmation symbol;
data is transmitted as successive groups of said symbols;
a station receiving data over said medium checks that each data symbol received is valid, and, after a group of data symbols has been received, transmits a confirmation symbol over said medium upon condition that all of said group of received symbols were valid;
a station having data to transmit over said medium refrains from transmitting until a predetermined period has elapsed without reception by that station of any data symbol or any confirmation symbol from any other station; and
a station which has transmitted a group of data symbols continues transmission only if it receives a valid confirmation symbol within a predetermined time interval after that group of data symbols has been transmitted.

13. A method according to claim 12, wherein all possible symbols outside said set are invalid and all superpositions of different data symbols form symbols which are not valid data symbols.

14. A method according to claim 12 or claim 13, wherein said set of symbols includes a message start symbol and wherein each said station, when it has data to transmit over said medium, transmits a message start symbol and transmits further symbols only if it receives a confirmation symbol in response to said message start symbol.

15. A method according to claim 12 or claim 13, wherein each said station, when it has data to transmit over said medium, transmits a plurality of symbols identifying a station intended to receive said data, and transmits further symbols only if it receives a confirmation symbol in response to said plurality of symbols.

16. A method according to claim 14 or claim 15, wherein a station receiving symbols identifying a station intended to receive data transmits a confirmation symbol in response thereto only if said symbols as received are valid and if that receiving station is the station identified by the symbols as intended to receive said data.

17. A method according to any one claims 12 to 16, wherein each station, when it has data to transmit over said medium, refrains from transmitting until a predetermined period has elapsed without reception by that station of any signal above a predetermined threshold signal strength.

18. A method according to any one of claims 12 to 17, wherein a station having data to transmit over said medium commences transmission within said predetermined period if it receives an indication that transmission by another station has terminated.

19. A method according to any one of claims 12 to 18, wherein a station receiving one or more symbols indicating the start of a transmission refrains from transmitting a confirmation symbol in response thereto unless said predetermined period without reception has elapsed.

20. A station for communicating data with other stations over a shared communications medium, comprising:
transmitter means and receiver means;
means for encoding data for transmission over said medium using a code which comprises a predetermined set of valid symbols, including data symbols and a confirmation symbol;
means coupled to said transmitter means for transmitting data as successive groups of said symbols;
means coupled to said transmitter means and said receiver means for checking, when data is being received over said medium, that each data symbol received is valid, and, after a group of data symbols has been received, for transmitting a confirmation symbol over said medium upon condition that all of said group of received symbols were valid;
means coupled to said transmitter means and said receiver means for inhibiting transmission of data over said medium until a predetermined period has elapsed without reception by that station of any data symbol or any confirmation symbol from any other station; and
means coupled to said transmitter means and said receiver means and operative when the station has transmitted a group of data symbols to inhibit continued transmission unless a valid confirmation symbol is received within a predetermined time interval after that group of data symbols has been transmitted.
